(19) Europäisches Patentamt / European Patent Office / Office européen des brevets

(11) **EP 4 314 749 B1**

(12) **FASCICULE DE BREVET EUROPEEN**

(45) Date de publication et mention
de la délivrance du brevet:
**22.01.2025 Bulletin 2025/04**

(21) Numéro de dépôt: **22714188.4**

(22) Date de dépôt: **14.03.2022**

(51) Classification Internationale des Brevets (IPC):
**G01M 3/20** (2006.01)        **H01J 49/02** (2006.01)
**H01J 49/30** (2006.01)

(52) Classification Coopérative des Brevets (CPC):
**G01M 3/205; H01J 49/022; H01J 49/30**

(86) Numéro de dépôt international:
**PCT/EP2022/056452**

(87) Numéro de publication internationale:
**WO 2022/200090 (29.09.2022 Gazette 2022/39)**

(54) **SPECTROMETRE DE MASSE POUR LA DETECTION DE FUITES PAR GAZ TRACEUR**

**MASSENSPEKTROMETER ZUR DETEKTION VON LECKAGEN ÜBER EIN SPÜRGAS**

**MASS SPECTROMETER FOR DETECTING LEAKAGES VIA A TRACER GAS**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **24.03.2021   FR 2102968**

(43) Date de publication de la demande:
**07.02.2024   Bulletin 2024/06**

(73) Titulaire: **ATEQ**
**78340 Les Clayes-sous-Bois (FR)**

(72) Inventeur: **MAY, Thierry**
**78340 Les Clayes-sous-Bois (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A2-2005/098900        US-A- 4 472 631**
**US-B1- 10 948 456**

## Description

La présente invention se rapporte au domaine des spectromètres de masse, et plus particulièrement à la détection de fuites par spectrométrie de masse de gaz traceurs.

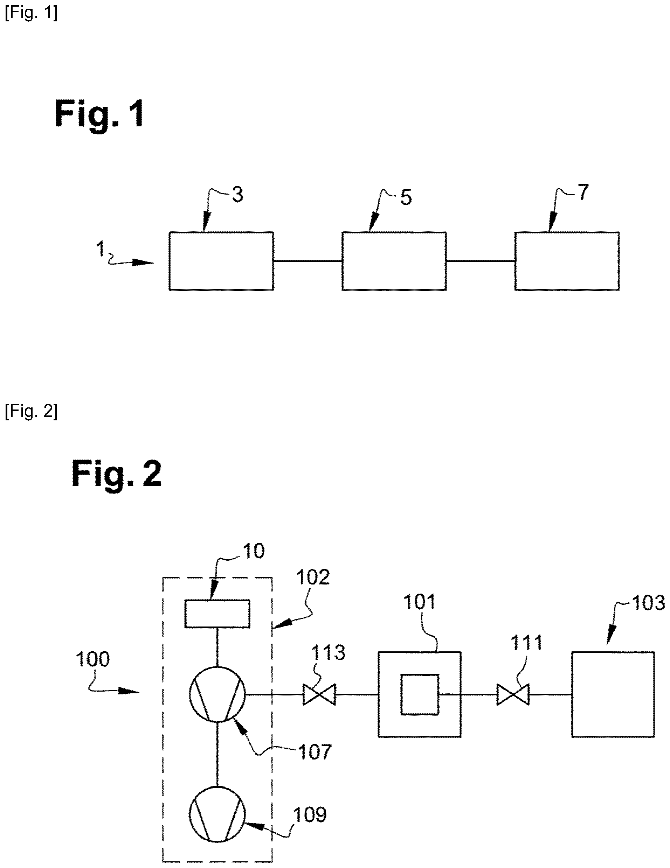

Pour rappel, un spectromètre de masse est un dispositif qui utilise le mouvement des ions dans des champs électriques et/ou magnétiques, afin de les classer en fonction de leurs rapports masse/charge. Comme illustré à la figure 1, un spectromètre de masse 1 comprend généralement un moyen d'ionisation 3, un analyseur 5 et un moyen de détection 7.

Le moyen d'ionisation 3 est configuré pour ioniser le ou les éléments chimiques qu'on souhaite analyser. Cette ionisation permet ainsi de générer des ions qui seront ensuite triés et sélectionnés en fonction de leurs rapports masse/charge.

Ce tri peut être obtenu de différentes manières, mais on s'intéresse ici, plus particulièrement, aux analyseurs qui procèdent, au moins, à une sélection par dispersion des ions grâce à un champ magnétique.

Les ions ainsi triés sont ensuite envoyés vers le moyen de détection 7, tel qu'un détecteur qui convertit le flux d'ions reçus en un courant électrique. Ledit courant électrique en sortie du détecteur subit par la suite un traitement du signal permettant d'obtenir des mesures plus précises relatives aux ions.

Ce type de spectromètre de masse peut notamment être utilisé pour la détection de fuites ou le contrôle d'étanchéité d'objets, par exemple en mesurant et quantifiant un gaz traceur, tel que l'hélium ou le dihydrogène. Cependant, d'autres types de gaz traceurs peuvent être utilisés, tels que du dioxygène, du dioxyde de carbone, etc.

Cependant, les spectromètres de masse utilisés pour la détection de fuite sont destinés à être utilisés dans des milieux industriels dans lesquels de nombreux facteurs environnementaux peuvent perturber les mesures ou les réglages, notamment les variations de température, les chocs, les vibrations, des déplacements, l'entretien des installations, etc.

Par ailleurs, un spectromètre de masse pour la détection de fuites doit aussi être le plus polyvalent possible, notamment en fonctionnant avec différents gaz traceurs, par exemple pour s'adapter aux gaz traceurs disponibles et/ou aux niveaux de fuites recherchés.

Les documents de brevet publiés sous les numéros WO 2005/098900, US 10948456 et US 4 472 631 décrivent des spectromètres de masse présentant tout ou partie des inconvénients précités.

La présente invention permet ainsi de remédier à une ou plusieurs des problématiques évoquées ci-dessus, en proposant un spectromètre de masse pour la détection de fuites par gaz traceur, ledit spectromètre comprenant:

- un moyen d'ionisation destiné à ioniser ledit gaz traceur ;
- au moins une source de champ magnétique engendrant un champ magnétique $\vec{B}$ dépendant du courant électrique I alimentant ladite source destinée au tri des éléments ionisés ;
- un moyen de détection dudit gaz traceur ionisé.

Selon l'invention, ledit spectromètre comprend un moyen de réglage du champ magnétique $\vec{B}$ engendré par ladite source, ledit moyen de réglage étant configuré pour permettre au moins deux réglages distincts, lesdits réglages présentant une sensibilité différente. En outre, selon l'invention, ledit moyen de réglage comprend au moins deux commandes de réglage, un circuit combinatoire configuré pour combiner les valeurs desdits au moins deux commandes, ainsi qu'un circuit d'asservissement du courant I circulant dans ladite source de champ magnétique.

Selon une caractéristique possible, ledit moyen de réglage comprend un préréglage (ou réglage grossier) et un réglage fin.

Selon une autre caractéristique possible, l'un des réglages permet d'établir un champ magnétique nominal $\vec{B_0}$, tandis que l'autre réglage permet de générer une variation de champ magnétique $\Delta\vec{B}$ autour de la valeur du champ magnétique nominal $\vec{B_0}$.

Le champ électromagnétique $\vec{B}$ engendré par la source de champ magnétique est donc dans ce cas la somme du champ magnétique nominal $\vec{B_0}$, et de la variation de champ magnétique $\Delta\vec{B}$.

Selon une autre caractéristique possible, ladite source de champ magnétique comprend un électroaimant.

On notera que la source de champ magnétique peut également être un secteur magnétique intégrant un ou plusieurs électroaimants.

Selon une autre caractéristique possible, lesdites au moins deux commandes de réglages sont des grandeurs électriques, telles que des tensions.

Selon une autre caractéristique possible, le champ magnétique B est fonction des valeurs des grandeurs électriques desdites au moins deux commandes de réglages.

Selon une autre caractéristique possible, le spectromètre de masse comprend N commandes de réglage et/ou N sources de champ magnétique, où N est un entier supérieur ou égal à 3.

La multiplicité des commandes de réglage et/ou des sources de champ magnétiques permet d'adresser un plus grand nombre de gaz traceurs et de faciliter les réglages dudit spectromètre de masse selon l'invention.

Selon une autre caractéristique possible, le circuit combinatoire comprend :

- une pluralité de résistances $R_1$, $R_2$, $R_3$ et $R_4$ ;
- un amplificateur opérationnel $AO_1$ associé auxdites résistances $R_1$, $R_2$, $R_3$ et $R_4$ pour former un montage sommateur non-inverseur.

Selon une autre caractéristique possible, le circuit d'asservissement comprend un amplificateur opérationnel $AO_2$ associé à une résistance de pied $R_S$ et à un transistor T1, l'ensemble formant un montage de type convertisseur tension-courant.

La présente invention se rapporte également à un système détection de fuites par gaz traceur caractérisé en ce qu'il comprend un spectromètre de masse tel que défini ci-dessus.

L'invention sera mieux comprise, et d'autres buts, détails, caractéristiques et avantages de celles-ci apparaîtront plus clairement au cours de la description suivante d'un mode de réalisation particulier de l'invention, donnée uniquement à titre illustratif et non limitatif, en référence aux dessins annexés, sur lesquels :

- La figure 1, référencée [Fig. 1], est une représentation très schématique d'un spectromètre de masse et de ses parties fonctionnelles principales;
- la figure 2, référencée [Fig. 2], est une représentation très schématique d'un exemple de montage pour contrôler l'étanchéité d'un objet au moyen d'un gaz traceur et d'un spectromètre de masse selon l'invention ;
- la figure 3, référencée [Fig. 3], est une représentation schématique agrandie du spectromètre de masse de la figure 2 ;
- la figure 4, référencée [Fig. 4], est une représentation schématique d'un moyen de réglage d'une source de champ magnétique du spectromètre de masse de la figure 2.

La figure 2 est une représentation très schématique d'un exemple d'un système de détection de fuites 100 par gaz traceur comprenant un spectromètre de masse 10 selon l'invention. On notera que le spectromètre de masse 10 comprend les mêmes parties fonctionnelles que le spectromètre de masse 1 de la figure 1, ainsi les éléments identiques ou similaires porteront les mêmes références et ne seront pas à nouveau détaillés.

Ledit système 100 comprend ainsi :

- une chambre de test 101 configurée pour accueillir un objet dont l'étanchéité doit être testée ;
- un dispositif de détection de fuite 102 qui est relié à la chambre de test 101 et qui comprend le spectromètre de masse 10, une pompe à vide principale 107 et une pompe à vide auxiliaire 109 ;
- une source de gaz 103 reliée à l'objet et configurée pour remplir ledit objet d'un gaz traceur, tel que de l'hydrogène ou de l'hélium.

La pompe à vide principale 107, tel qu'une pompe turbomoléculaire, présente une entrée reliée à la chambre de test 101, mais est également reliée au spectromètre de masse 10. La pompe à vide auxiliaire 109 est, quant à elle, reliée à la sortie de la pompe à vide principale 107.

Ledit système 100 comprend également plusieurs vannes 111 et 113 :

- une première vanne 111 disposée sur le conduit reliant la source de gaz 103 à l'objet testé qui est quant à lui disposé dans la chambre de test 101, ladite vanne 111 permettant de réguler la quantité de gaz traceur injecté dans l'objet testé ;
- une deuxième vanne 113 disposée sur le conduit reliant la chambre de test 101 à la pompe à vide principale 107.

La pompe principale 107 génère un vide poussé par lequel le gaz traceur, qui est entré dans la chambre d'essai 101 par une fuite de l'objet testé, est aspiré. Par la suite, à l'intérieur de la pompe principale 107, le gaz traceur s'écoule alors principalement en direction de la pompe auxiliaire 109, mais une partie du gaz traceur se déplace dans le spectromètre de masse 10 afin d'y être analysé.

La pompe à vide principale 107 est par exemple une pompe turbomoléculaire, une pompe à diffusion ou tout autre type de pompe moléculaire permettant d'atteindre des niveaux de vide compatibles avec la détection de fuites de l'ordre d'au moins $10^{-3}$ mbar.L/sec.

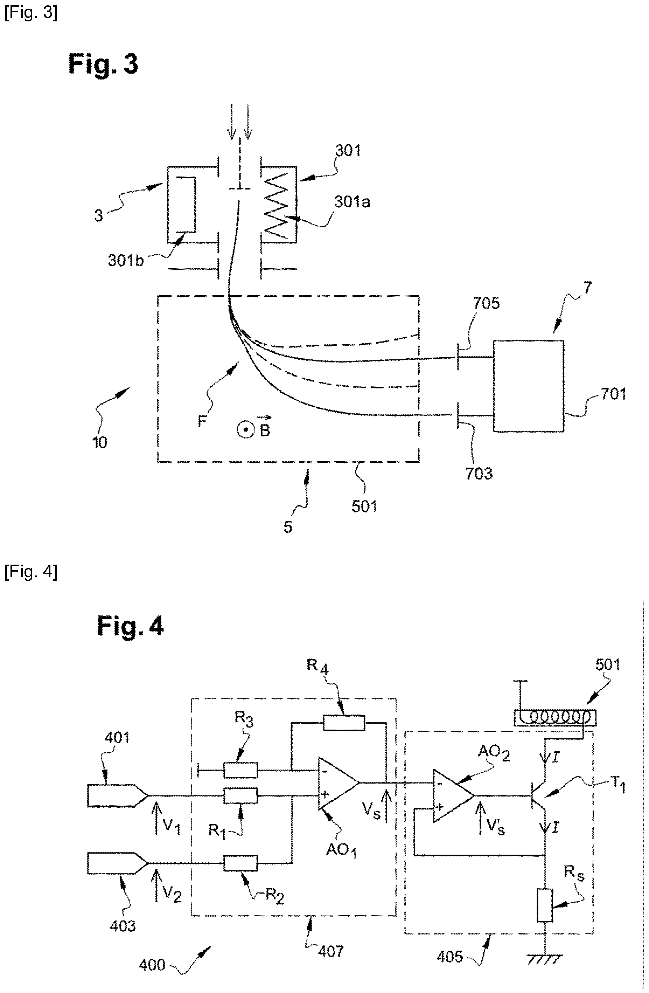

Comme illustré à la figure 3, le spectromètre de masse 10 comprend ainsi un moyen d'ionisation 3, comprenant par exemple une source d'ions 301 avec une cathode 301a et une anode 301b. La source d'ions 301 est entourée d'un écran dans lequel est aménagée une ouverture (ou diaphragme) permettant la sortie d'un faisceau d'ions F vers un analyseur 5.

L'analyseur 5 est, quant à lui, configuré pour sélectionner les ions pertinents, le tri s'effectue notamment au moyen d'un champ magnétique $\vec{B}$. En effet, l'analyseur 5 comprend notamment une source de champ magnétique 501 configurée pour engendrer un champ magnétique $\vec{B}$ orthogonal au plan de la trajectoire des ions (c'est-à-dire orthogonal au plan de la figure 3, propre à incurver la trajectoire des ions).

La source de champ magnétique 501 est plus particulièrement une source dont le champ magnétique dépend du courant électrique qui « alimente » ladite source.

Ainsi, la source de champ magnétique 501 est par exemple un électroaimant, c'est-à-dire un matériau ferromagnétique sur lequel un bobinage est disposé, le champ magnétique engendré dépendant du courant électrique circulant dans ledit bobinage (notamment de son sens de circulation et de son intensité). On notera que ladite source 501 pourrait également être un secteur magnétique par exemple.

Ainsi, en présence d'un champ magnétique $\vec{B}$, le faisceau d'ions F est dévié. En effet, un champ magnétique $\vec{B}$ uniforme perpendiculaire au plan de la trajectoire des ions, du fait de la force de Lorentz, va donner une trajectoire courbe auxdits ions (le point d'impact de l'ion, donc sa déviation, permettant de connaître sa masse à partir de la charge).

Le faisceau d'ions F dévié par le champ magnétique $\vec{B}$ est alors orienté vers un ou plusieurs diaphragmes après lesquels est disposé un moyen de détection 7.

Ledit moyen de détection 7 comprend par exemple un ou plusieurs capteurs 703 et/ou 705 et un circuit électronique 701 relié auxdits capteurs 703 et 705 pour traiter le signal électrique issu de ceux-ci.

On notera que le spectromètre de masse 10 peut également comporter les éléments (non représentés) suivants, des lentille(s) électrostatique(s) de couplage, de focalisation, collectrice(s)... des plaques accélératrices, etc. Ces éléments peuvent être disposés au niveau de la source d'ionisation 3, l'analyseur 5 ou du moyen de détection 7, ou entre lesdits moyens 3, 5 et 7.

Ainsi, lorsque le champ magnétique $\vec{B}$ dans l'analyseur 5, est réglé de façon à adresser exactement des gaz traceurs ayant une masse M déterminée au milieu d'au moins un diaphragme 501a ou 501b (faisant office de fente de sélection), les autres gaz ayant même charge électrique, mais ayant des masses différentes de M vont tourner, dans l'analyseur 4, suivant des rayons différents. Les gaz de masse inférieure à M vont tourner suivant un rayon plus petit, tandis que les gaz de masse supérieure à M vont tourner suivant un rayon plus grand que celui associé au gaz de masse M.

Pour permettre le réglage du champ magnétique $\vec{B}$, le spectromètre de masse 10 comprend un moyen de réglage 400 du champ magnétique engendré par ladite source 501, par exemple par l'électroaimant. Ce moyen est illustré plus particulièrement en figure 4.

Comme illustré sur cette figure 4, ledit moyen de réglage 401 est relié à la bobine de l'électroaimant 501 et est configuré pour faire varier l'intensité du courant I circulant dans ladite bobine.

Le moyen de réglage 401 comprend ainsi deux commandes de réglage distinctes 401 et 403, un circuit d'asservissement 405 en courant dudit électroaimant 501, ainsi qu'un circuit combinatoire 407 desdites commandes 401 et 403. Ledit circuit combinatoire 407 est configuré pour recevoir en entrée lesdites commandes 401 et 403 et générer ainsi en sortie une fonction F dépendant des valeurs desdites commandes 401 et 403.

La fonction F résultante est ainsi envoyée vers le circuit d'asservissement 405 pour qu'il y ait régulation du courant I en fonction des valeurs desdites commandes 401 et 403.

Lesdites commandes 401 et 403 sont par exemple des convertisseurs numériques analogiques qui délivrent en entrée du circuit combinatoire 407, respectivement des tensions $V_1$ et $V_2$. On notera cependant que toute grandeur électrique pourrait être adaptée, moyennant les aménagements adéquats.

Ledit circuit combinatoire 407, quant à lui, comprend notamment :

- une pluralité de résistances $R_1$, $R_2$, $R_3$ et $R_4$ ;
- un amplificateur opérationnel $AO_1$ associé auxdites résistances $R_1$, $R_2$, $R_3$ et $R_4$ pour former un montage sommateur non-inverseur.

Ainsi, ledit circuit combinatoire 407 présentera en sortie une tension $V_S$ dépendant des valeurs de tension d'entrée $V_1$ et $V_2$, ainsi que des résistances $R_1$, $R_2$, $R_3$ et $R_4$, du type :

$$F(V_1, V_2) = V_S = \frac{R_4 + R_3}{R_3} \frac{R_2 V_1 + R_1 V_2}{R_1 + R_2}$$

En choisissant judicieusement la valeur desdites résistances $R_1$, $R_2$, $R_3$ et $R_4$, par exemple en prenant $R_1 = R_3 = R_4 = R$ et $R_2 = kR$ avec k une constante supérieure 1, et de préférence très supérieure à 1, la fonction F se simplifie pour donner :

$$F(V_1, V_2) = V_S = 2\left(V_1 + \frac{V_2}{k}\right)$$

Les deux commandes $V_1$ et $V_2$ présentent ainsi une pondération différente et influencent donc la valeur de la tension de sortie $V_S$ de manière distincte. On notera que l'influence de la tension $V_2$ est k fois moins importante que l'influence de la tension $V_1$ sur la tension de sortie $V_S$.

Ledit circuit d'asservissement 405 comprend, quant à lui, un amplificateur opérationnel $AO_2$ associé à une résistance de pied $R_S$ et à un transistor T1, l'ensemble formant en un montage de type convertisseur tension-courant (ou transconductance). Le transistor $T_1$ est par exemple un transistor bipolaire (ou de type MOSFET) dont la base (ou la grille) est reliée à la sortie de l'amplificateur opérationnel $AO_2$, le collecteur (ou la source) est relié à l'électroaimant 501, et l'émetteur (ou le drain) est relié à la résistance $R_S$.

La tension de sortie $V_S$ issue du circuit combinatoire 407 est envoyée sur l'entrée inverseuse de l'amplificateur opérationnel $AO_2$, tandis que l'entrée non-inverseuse est reliée à la résistance de pied $R_S$ et à l'émetteur du transistor $T_1$ (plus particulièrement reliée à un nœud situé entre l'émetteur du transistor $T_1$ et la résistance de pied $R_S$).

La tension de sortie $V'_S$ issue de l'amplificateur opérationnel $AO_2$ régule ainsi la valeur du courant I circulant à travers le transistor $T_1$, mais également à travers l'électroaimant 501. Le courant I dépend des tensions $V_1$ et $V_2$ des commandes 401 et 403 selon la formule suivante :

$$I = \frac{2}{R_S}\left(V_1 + \frac{V_2}{k}\right)$$

Le champ magnétique $\vec{B}$ est ainsi fonction (plus particulièrement proportionnel pour un électroaimant) à l'intensité du courant I circulant dans la bobine de l'électroaimant 501, en conséquence le champ $\vec{B}$ est ici fonction des commandes 401 et 403.

On peut aussi définir que le courant I circulant dans l'électroaimant 501 de la manière suivante :

$$I = I_0 + \varDelta I$$

où $I_0$ est un courant nominal, dépendant de la tension $V_1$, qui engendre un champ magnétique nominal $\overrightarrow{B_0}$, et

où $\varDelta I$ est une petite variation de courant autour du courant nominal $I_0$, dépendant de $V_2$, qui engendre une variation $\varDelta\vec{B}$ du champ magnétique autour de la valeur du champ magnétique nominal $\overrightarrow{B_0}$.

Ainsi, l'une des commandes de réglage 401 permet d'établir un champ magnétique nominal $\overrightarrow{B_0}$, tandis que l'autre commande de réglage permet de générer une variation de champ magnétique $\varDelta\vec{B}$ autour de la valeur du champ magnétique nominal $\overrightarrow{B_0}$.

On peut également définir que ledit moyen de réglage 400 comprend un une commande de réglage 401 équivalent à un préréglage (ou réglage grossier), tandis que la commande de réglage 403 est un réglage fin.

## Revendications

1. Spectromètre de masse (10) pour la détection de fuites par gaz traceur, ledit spectromètre (10) comprenant:

   - un moyen d'ionisation (3) destiné à ioniser ledit gaz traceur ;
   - au moins une source de champ magnétique (501) engendrant un champ magnétique $\vec{B}$ dépendant du courant électrique I alimentant ladite source (501) destinée au tri des éléments ionisés ;
   - un moyen de détection (7) dudit gaz traceur ionisé ;

   ledit spectromètre comprenant un moyen de réglage (400) du champ magnétique $\vec{B}$ engendré par ladite source (501) , ledit moyen de réglage (400) étant configuré pour permettre au moins deux réglages distincts, lesdits réglages présentant une sensibilité différente, **caractérisé en ce que** ledit moyen de réglage (400) comprend au moins deux commandes (401 et 403) de réglage, un circuit combinatoire (407) configuré pour combiner les valeurs desdits au moins deux commandes (401 et 403), ainsi qu'un circuit d'asservissement (405) du courant I circulant dans ladite source de champ magnétique (501).

2. Spectromètre de masse selon la revendication précédente, **caractérisé en ce que** ledit moyen de réglage comprend un préréglage et un réglage fin.

3. Spectromètre de masse selon l'une quelconque des revendications précédentes, **caractérisé en ce que** l'un des réglages permet d'établir un champ magnétique nominal tandis que l'autre réglage permet de générer une variation de champ magnétique $\varDelta\vec{B}$ autour de la valeur du champ magnétique nominal $\overrightarrow{B_0}$.

4. Spectromètre de masse selon l'une quelconque des revendications précédentes, **caractérisé en ce que** ladite source de champ magnétique (501) comprend un électroaimant.

5. Spectromètre de masse selon la revendication précédente, **caractérisé en ce que** lesdites au moins deux commandes de réglages sont des grandeurs électriques $V_1$ et $V_2$, telles que des tensions.

6. Spectromètre de masse selon la revendication précédente, **caractérisé en ce que** le champ magnétique $\vec{B}$ est fonction des valeurs des grandeurs électriques $V_1$ et $V_2$ desdites au moins deux commandes de réglages.

7. Spectromètre de masse selon la revendication 5, **caractérisé en ce que** le circuit combinatoire (407) comprend:

   - une pluralité de résistances ($R_1$, $R_2$, $R_3$ et $R_4$) ;
   - un amplificateur opérationnel $AO_1$ associé auxdites résistances ($R_1$, $R_2$, $R_3$ et $R_4$) pour former un montage sommateur non-inverseur.

8. Spectromètre de masse selon la revendication 5, **caractérisé en ce que** le circuit d'asservissement (405) comprend un amplificateur opérationnel $AO_2$ associé à une résistance de pied ($R_S$) et à un transistor (T1), l'ensemble formant un montage de type convertisseur tension-courant.

9. Spectromètre de masse selon l'une quelconque des revendications précédentes, caractérisé en qu'il comprend N commandes de réglages et/ou N sources de champ magnétique, où N est un entier supérieur ou égal à 3.

10. Système de détection de fuites par gaz traceur, **caractérisé en ce qu'**il comprend un spectromètre de masse (10) selon l'une quelconque des revendications précédentes.

## Patentansprüche

1. Massenspektrometer (10) zum Nachweis von Tracergaslecks, wobei das Spektrometer (10) umfasst:

   - ein Ionisationsmittel (3), das dazu bestimmt ist, das Tracergas zu ionisieren;
   - mindestens eine Magnetfeldquelle (501), die ein Magnetfeld $\vec{B}$ erzeugt, das von dem elektrischen Strom I abhängt, der die Quelle (501) zum Sortieren der ionisierten Elemente speist;
   - ein Nachweismittel (7) für das ionisierte Tracergas;

   wobei das Spektrometer ein Einstellmittel (400) für das von der Quelle (501) erzeugte Magnetfeld $\vec{B}$ umfasst, wobei das Einstellmittel (400) so konfiguriert ist, dass es mindestens zwei verschiedene Einstellungen ermöglicht, wobei die Einstellungen eine unterschiedliche Empfindlichkeit aufweisen, **dadurch gekennzeichnet, dass** das Einstellmittel (400) mindestens zwei Befehle (401 und 403) zum Einstellen, eine Kombinationsschaltung (407), die so konfiguriert ist, dass sie die Werte der mindestens zwei Befehle (401 und 403) kombiniert, sowie eine Regelschaltung (405) für den in der Magnetfeldquelle (501) fließenden Strom I umfasst.

2. Massenspektrometer nach dem vorhergehenden Anspruch, **dadurch gekennzeichnet, dass** das Einstellmittel eine Voreinstellung und eine Feineinstellung umfasst.

3. Massenspektrometer nach einem der vorhergehenden Ansprüche, **dadurch gekennzeichnet, dass** eine der Einstellungen ein nominales Magnetfeld $\vec{B_0}$ erzeugt, während die andere Einstellung eine Magnetfeldvariation $\Delta\vec{B}$ um den Wert des nominalen Magnetfelds $\vec{B_0}$ erzeugt.

4. Massenspektrometer nach einem der vorhergehenden Ansprüche, **dadurch gekennzeichnet, dass** die Magnetfeldquelle (501) einen Elektromagneten umfasst.

5. Massenspektrometer nach dem vorhergehenden Anspruch, **dadurch gekennzeichnet, dass** die mindestens zwei Befehle zum Einstellen elektrische Größen $V_1$ und $V_2$, wie z. B. Spannungen, sind.

6. Massenspektrometer nach dem vorhergehenden Anspruch, **dadurch gekennzeichnet, dass** das Magnetfeld $\vec{B}$ eine Funktion der Werte der elektrischen Größen $V_1$ und $V_2$ der mindestens zwei Befehle zum Einstellen ist.

7. Massenspektrometer nach Anspruch 5, **dadurch gekennzeichnet, dass** die Kombinationsschaltung (407) umfasst:

   - eine Vielzahl von Widerständen ($R_1$, $R_2$, $R_3$ und $R_4$);
   - einen Operationsverstärker $AO_1$, der den Widerständen ($R_1$, $R_2$, $R_3$ und $R_4$) zugeordnet ist, um eine nicht-invertierende Summierschaltung zu bilden.

8. Massenspektrometer nach Anspruch 5, **dadurch gekennzeichnet, dass** die Regelschaltung (405) einen Operationsverstärker $AO_2$ umfasst, der mit einem Fußwiderstand ($R_s$) und einem Transistor ($T_1$) verbunden ist, wobei das Ganze eine Schaltung vom Typ Spannungs-Strom-Wandler bildet.

9. Massenspektrometer nach einem der vorhergehenden Ansprüche, **dadurch gekennzeichnet, dass** es N Befehle zum Einstellen und/oder N Magnetfeldquellen umfasst, wobei N eine ganze Zahl größer oder gleich 3 ist.

10. Tracergaslecknachweissystem, **dadurch gekennzeichnet, dass** es ein Massenspektrometer (10) nach einem der vorhergehenden Ansprüche umfasst.

## Claims

1. Mass spectrometer (10) for detecting leakages via a tracer gas, said spectrometer (10) comprising:

   - ionisation means (3) intended for ionising said tracer gas;
   - at least one magnetic field source (501) generating a magnetic field $\vec{B}$ dependent on the electric current I supplying said source (501) intended for sorting ionised elements;
   - means for detecting (7) said ionised tracer gas;

   said spectrometer comprising means for setting (400) the magnetic field $\vec{B}$ generated by said source (501), said setting means (400) being configured to allow at least two distinct settings, said settings having different sensitivities, **characterised in that** said setting means (400) comprises at least two setting controls (401 and 403), a combinatorial circuit (407) configured to combine the values of said at least two controls (401 and 403), and a servo circuit (405) for the current I flowing in said magnetic field source (501).

2. Mass spectrometer according to the preceding claim, **characterised in that** said setting means comprises a presetting and a fine setting.

3. Mass spectrometer according to any one of the preceding claims, **characterised in that** one of the settings makes it possible to establish a nominal magnetic field while the other setting makes it possible to generate a magnetic field variation $\Delta\vec{B}$ around the value of the nominal magnetic field $\vec{B_0}$.

4. Mass spectrometer according to any one of the preceding claims, **characterised in that** said magnetic field source (501) comprises an electromagnet.

5. Mass spectrometer according to the preceding claim, **characterised in that** said at least two setting controls are electrical quantities $V_1$ and $V_2$, such as voltages.

6. Mass spectrometer according to the preceding claim, **characterised in that** the magnetic field $\vec{B}$ is a function of the values of the electrical quantities $V_1$ and $V_2$ of said at least two setting controls.

7. Mass spectrometer according to claim 5, **characterised in that** said combinatorial circuit (407) comprises:

   - a plurality of resistors ($R_1$, $R_2$, $R_3$ and $R_4$);
   - an operational amplifier $AO_1$ associated with said resistors ($R_1$, $R_2$, $R_3$ and $R_4$) to form a non-inverting summing assembly.

8. Mass spectrometer according to claim 5, **characterised in that** the servo circuit (405) comprises an operational amplifier $AO_2$ associated with a base resistor ($R_S$) and with a transistor (T1), thus forming a voltage-current converter assembly.

9. Mass spectrometer according to any one of the preceding claims, **characterised in that** it comprises N setting controls and/or N magnetic field sources, where N is an integer greater than or equal to 3.

10. System for detecting leakages via a tracer gas, **characterised in that** it comprises a mass spectrometer (10) according to any one of the preceding claims.

[Fig. 1]

# Fig. 1

[Fig. 2]

# Fig. 2

[Fig. 3]

# Fig. 3

[Fig. 4]

# Fig. 4

**EP 4 314 749 B1**

## RÉFÉRENCES CITÉES DANS LA DESCRIPTION

**Documents brevets cités dans la description**

- WO 2005098900 A
- US 10948456 B
- US 4472631 A